# EUROPEAN PATENT SPECIFICATION

(11) **EP 1 998 405 B1**
(45) Date of publication and mention of the grant of the patent: **12.10.2011**
(21) Application number: 07425328.7
(22) Date of filing: 29.05.2007
(51) Int. Cl.: H01R 4/64, H01R 11/28, H01R 13/18, H01R 13/627, H01R 13/639

(54) **Electrical terminal**
Elektrisches Anschlusselement
Élément de raccordement électrique

(43) Date of publication of application: 03.12.2008
(73) Proprietor: MTA S.p.A., 26845 Codogno (Lodi) (IT)
(72) Inventor: Falchetti, Antonio, I-26845 Codogno (IT)
(74) Representative: Perani, Aurelio

(56) References cited:
- EP-A- 1 729 372
- US-A- 5 011 439
- US-A- 6 136 465

## Description

The present invention relates to a female electrical terminal in accordance with the preamble of claim 1. Particularly, the female terminal of the present invention may find application for ground connection to motor vehicle bodies.

A female terminal for coupling to a male terminal is disclosed, for instance, in EP 1 729 372.

EP 1 729 372 discloses a female electrical terminal comprising a conductive body having a conductive part able to be coupled to a male electrical terminal in a coupling direction and means for clamping such conductive part onto the male terminal. Particularly, the conductive part comprises two portions that can be moved towards each other along an axis transverse to the coupling axis, and the clamping means are operable on such portions so that their motion towards each other causes the conductive part to be clamped onto the male terminal. The clamping means comprise a holding member associated outside to the conductive part which encircles the conductive part so that such conductive part is held in contact with the male terminal. The conductive part further has a plurality of lugs which are able to abut against an axial abutment member which projects out of the male terminal transverse to the coupling axis, to prevent any axial displacement of the female electrical terminal along the coupling axis in the direction opposite to the plug-on direction, when the female terminal is plugged on the male terminal.

The above electrical terminal suffers from certain drawbacks. First, when the female terminal is to be plugged off the male terminal, the lugs of the conductive portion have to be acted upon to be disengaged from the axial abutment member of the male terminal, thereby allowing the female terminal to be displaced along the coupling axis, in the direction opposite to the plug-on direction. However, the lugs of the conductive part are not easily disengageable, as the lugs are formed directly on the conductive part which is firmly held against the male terminal by the retaining element, wherefore the lugs have to be disengaged by also counteracting the clamping action of the retaining element.

Further attention is drawn to US 6,136,465 which shows the features of the preamble of claim 1.

Therefore, the need arises of providing a female electrical terminal which allows quick locking and unlocking thereof on a male terminal.

Thus, the object of this invention is to provide a female electrical terminal that has such features as to fulfill the above need, while obviating the drawbacks of prior art.

This object is achieved by a female electrical terminal according to claim 1.

Thanks to the provision of first lock means connected to a conductive portion supporting element and second lock means able to be removably associated to the first lock means, the female terminal can be unlocked from the male terminal in a quick and easy manner.

Further features and advantages of the female electrical terminal of this invention, will be apparent from the following description of one preferred embodiment thereof, which is given by way of illustration and without limitation with reference to the accompanying figures, in which:

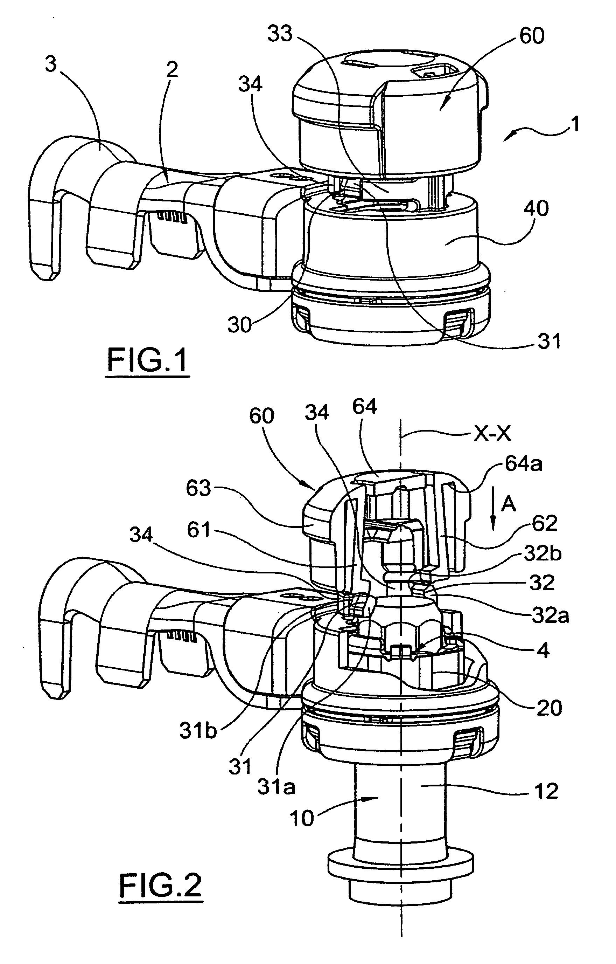

- Figure 1 is a perspective view of a female electrical terminal of the present invention,
- Figure 2 is a partially sectional perspective view of the female terminal of Figure 1, prior to plugging thereof onto a male terminal,
- Figure 3 is a partially sectional perspective view of the female terminal of Figure 1, during plugging thereof onto a male terminal,
- Figure 4 is a partially sectional perspective view of the female terminal of Figure 1, when the latter is plugged on a male terminal, and

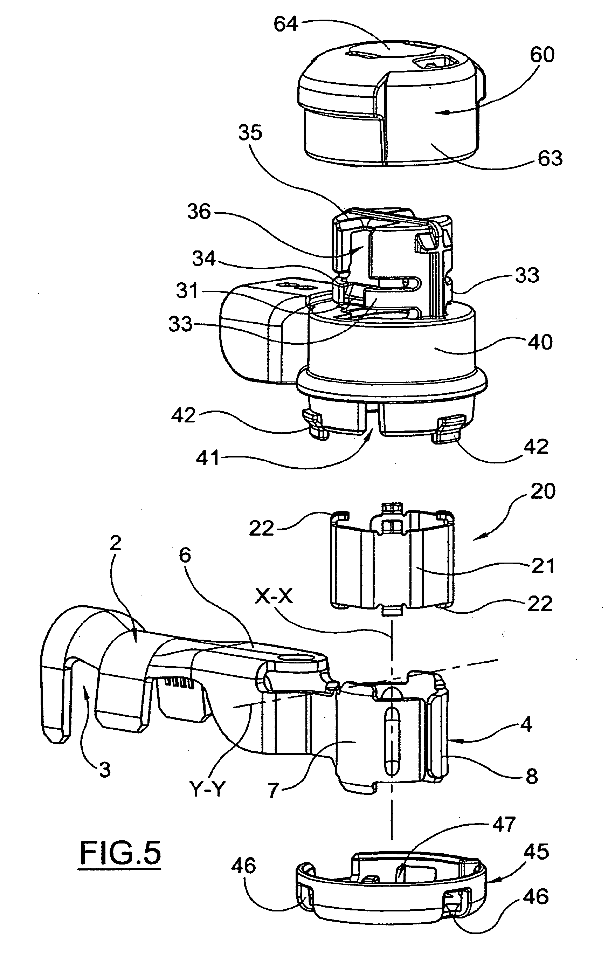

- Figure 5 is an exploded perspective view of the female terminal of Figure 1.

Referring to the annexed figures, numeral 1 generally designates a female electrical terminal of the present invention.

The female electrical terminal 1 has a conductive body 2 with a first conductive part 3 able to be connected to a cable lug (not shown) and a second conductive part 4 able to be coupled, along a coupling axis, designated by X-X, and in a plug-on direction, indicated by arrow A, to a male electrical terminal 10 which mainly extends along the coupling axis X-X. The first conductive part 3 and the second conductive part 4 are interconnected by a linking portion 6.

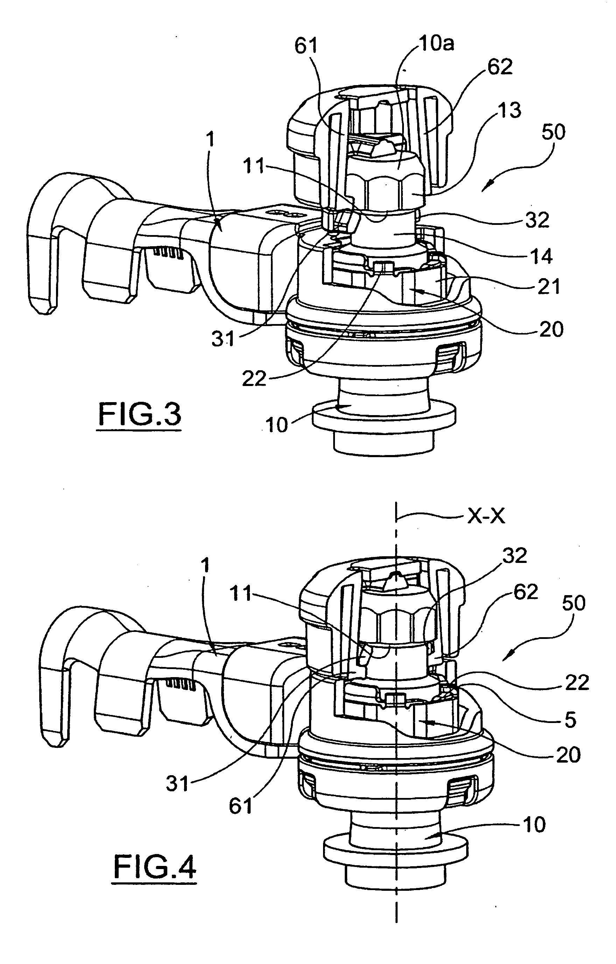

The female electrical terminal 1 plugged on the male electrical terminal 10 forms an electrical connection 50 (Figure 4). The electrical connection 50 may be used for grounding electric and/or electronic devices. In this case, the male terminal 10 is a ground terminal attached to a structure that acts as a ground mass (not shown), whereas the ground connection of the devices to be grounded is connected, as is known per se, to the female terminal 1 by an electric cable. This provides a ground connection of the electronic devices connected to the female terminal 1 via the electric cable.

The structure that acts as a ground mass may be, for instance, the body of a motor vehicle, particularly a car.

Otherwise, the electric connection 50 may be used to connect the battery clips to the battery pole, wherein the battery clip is defined by the female electrical terminal 1 whereas the battery pole is defined by the male electrical terminal 10.

The female terminal 1 shall meet predetermined electrical conductivity requirements and is this formed of a conductive metal material, such as copper.

The male terminal 10 is formed, for instance, of a zinc-plated steel alloy. Particularly, the use of a steel alloy affords easier and safer welding of the male terminal 1.0 to the structure acting as a ground mass when welding on a car body.

In this example, the male terminal 10 comprises a cylindrical body 12, extending axially in the coupling direction X-X. Otherwise, the male terminal 10 may be of laminar type, or of any other shape allowing it to act as a male terminal.

According to the embodiment of the figures, the conductive part 4 comprises at least two portions 7, 8 that can be moved towards each other along an axis, designated as Y-Y, which is transverse to the coupling axis X-X of the female terminal 1 and the male terminal 10. In this example, the axis Y-Y is perpendicular to the coupling axis X-X.

The terminal 1 further comprises clamping means 20 associated outside to the conductive part 4 for clamping the conductive part 4 onto the male terminal 10, and first lock means 30 for engaging an abutment surface 11 of the male terminal 10 when the female terminal 1 is plugged on the male terminal 10.

Particularly, for quick and easy unlocking of the first lock means 30 from the abutment surface 11 of the male terminal 10, the female terminal 1 comprises a support element 40 which supports the conductive part 4 and is connected to the first lock means 30, as well as second lock means 60 able to be removably associated to the first lock means 30 and to be moved from a locking position to an unlocking position.

In the locking position, the second lock means 60 act on the first lock means 30 to prevent disengagement of the first lock means 30 from the abutment surface 11 of the male terminal, thereby preventing displacement of the female terminal 1 along the coupling axis X-X in the direction opposite to the plug-on direction, whereas in the unlocking position, the second lock means 60 disengage from the first lock means 30 to allow disengagement of the first lock means 30 from the abutment surface 11 thereby allowing displacement of the female terminal 1 along the coupling axis X-X.

In one embodiment, the first lock means 30 comprise at least two stop members, in this example two stop members 31, 32, which are able to move transverse to the coupling axis X-X and the second lock means 60 comprise at least two lugs, in this example two lugs 61, 62.

Particularly, in the locking position, each lug 61, 62 presses against a corresponding stop member 31, 32 to prevent disengagement of the stop member 31, 32 from the abutment surface 11 of the male terminal 10 whereas, in the unlocking position, each lug 61, 62 disengages from its respective stop member 31, 32 to allow disengagement of the stop member 31, 32 from the abutment surface 11 of the male terminal 10.

In the embodiment as shown in the figures, each stop member 31, 32 is supported by two opposite tabs 33, 34 which are connected to the ends 31a, 31b and 32a, 32b of the stop member 31, 32 and act, according to a preferred embodiment, on the stop member 31, 32 to hold the stop member 31, 32 in the locking position.

Particularly, the tabs 33, 34 are connected to a support member 35, which is connected to the support element 40 and projects therefrom along the coupling axis X-X. The support member 35 is closed at its bottom and has a receptacle 36 for receiving the male terminal 10 so that the tabs 33, 34 connected thereto encircle the male terminal 10, in the locking position, so that the stop members 31, 32 engage the abutment surface 11 of the male terminal 10.

According to one embodiment, the female electrical terminal 1 further comprises a cover element 45. The support element 40 is open at its top and has a receptacle 41 for receiving the conductive part 4 of the conductive body 2 which connects the conductive part 4 to the conductive part 3.

The receptacle 41 of the support element 40 is closed at its top by the cover element 45, which is secured to the support element 40 by retaining tabs 42 of the support element 40 and snap fitted in corresponding apertures 46 formed in the cover element 45. In order to allow the female terminal 1 to be plugged onto the male terminal 10, the cover element 45 has a through hole 47 for receiving the male terminal 10 along the coupling axis X-X.

Opposite to the cover element 45 along the coupling axis X-X, the support element 40 has the support member 35 for supporting the tabs 33, 34.

According to one embodiment of the invention, the second lock means 60 comprise a tubular element 63 which is closed at its top by a top wall 64 and open at its bottom. Particularly, the lugs 61, 62 are connected to the inner surface 64a of the top wall 64 of the tubular element 63.

In the example as shown in the annexed figures, the tubular element 63 has the shape of a closure plug. Otherwise, the lugs 61, 62 may be connected to and supported by a member having a different shape and function, provided that the lugs 61, 62 still have the function of pressing against the stop members 31, 32.

According to the embodiment as shown in the annexed figures, the clamping means 20 comprise a holding member 21 associated outside to the conductive part 4 to encircle the conductive part 4 so that such conductive part 4 is held in contact with the male terminal 10.

The holding member 21 may be formed, for example, of metal material or any other material having such characteristics as to be able to exert a sufficient encircling action to hold the conductive part 4 in contact with the male terminal 10. The metal material of the holding member 21 may be, for example, AISI 301 stainless steel, which has sufficient elasticity.

For the clamping means 20, i.e. the holding member 21, to be secured to the conductive part 4 of the female terminal 1, the clamping means 20 have retaining means 22 engaged with the conductive part 4. In this example, the retaining means 22 comprise a plurality of retaining tabs 22 disposed on the holding member 21 for engagement with corresponding abutment surfaces of the conductive part 4, particularly of the two portions 7, 8 to be moved towards each other. Thus, the clamping means 20 are allowed to move integrally with the conductive part 4, particularly along the coupling axis X-X, or are secured to the conductive part 4 of the female terminal 1.

Prior to plugging the female terminal 1 onto the male terminal 10, the stop members 31, 32 are in a rest position.

As the female terminal 1 is plugged onto the male terminal 10, the stop members 31, 32 abut against the axial abutment member 13 of the male terminal 10, which projects transverse to the coupling axis X-X and is defined at the top end 10a of the male terminal 10. The abutment member 13 pushes the stop members 31, 32 outwards, along the transverse axis Y-Y, by advantageously counteracting an elastic return force directed towards the rest position of the members 31, 32.

As the female terminal 1 is further plugged onto the male terminal 10 along the coupling axis X-X, the stop members 31, 32 move past the abutment member 13 of the male terminal 10 until they reach an annular groove 14 having a smaller diameter than the abutment member 13 and, preferably under the elastic return force which pushes them towards the locking position, they reach the locking position against the abutment surface 11.

In this position, any attempt to move the female terminal along the coupling axis X-X in the direction opposite to the plug-on direction would be partially hindered, but still possible, in spite of the engagement of the stop members 31, 32 with the abutment surface 11, which is defined in this example by the bottom surface of the axial abutment member 13 of the male terminal 1.

For safe locking of the female terminal 1 on the male terminal 10, the user fits the tubular element 63 with the lugs 61, 62 thereon, onto the support member 35 having the stop members 31, 32. The lugs 61, 62 move from the unlocking position to the locking position, in which they act on the stop members 31, 32 to prevent disengagement thereof from the abutment surface 11 of the male terminal 1, thanks to their being held in such position by the lugs 61, 62.

Whenever a user wants to unplug the female terminal 1 from the male terminal 10, he/she simply has to remove the tubular element 63 with the lugs 61, 62 thereon from the support member 35 having the stop members 31, 32 until the lugs 61, 62 disengage from the stop members 31, 32. In this condition, the stop members 31, 32 are no longer held by the lugs 61, 62, wherefore the female terminal 1 is movable along the coupling axis X-X in a direction opposite to the plug-on direction until the two stop members 31, 32 move past the axial abutment member 13 of the male terminal 10.

It will be appreciated from the above that the female electrical terminal of the present invention obviates prior art drawbacks. Namely, the provision of first lock means connected to a conductive portion supporting element and second lock means removably associated to the first lock means, the female terminal can be unlocked from the male terminal in a quick and easy manner.

Those skilled in the art will obviously appreciate that a number of changes and variants may be made to the female electrical terminal of the invention as described hereinbefore to meet specific needs, without departure from the scope of the invention, as defined in the following claims.

## Claims

1. A female electrical terminal (1) comprising:
- a conductive body (2) having a conductive part (4) able to be coupled to a male electrical terminal (10), along a coupling axis (X-X) and in a plug-on direction,
- clamping means (20), associated outside to the conductive part (4) for clamping said conductive part (4) onto said male terminal (10),
- first lock means (30) able to engage an abutment surface (11) of said male terminal (10), when the female terminal (1) is plugged on the male terminal (10),
- a support element (40) which supports said conductive part (4) and is connected to said first lock means (30),
**characterized in that** it comprises
- second lock means (60) which can be removably associated to said first lock means (30) and movable from a locking position to an unlocking position,
in said locking position, said second lock means (60) act on said first lock means (30) to prevent disengagement of said first lock means (30) from said abutment surface (11), thereby preventing displacement of the female terminal (1) along said coupling axis (X-X) in the direction opposite to the plug-on direction, in said unlocking position, said second lock means (60) disengage from said first lock means (30) to allow disengagement of said first lock means (30) from said abutment surface (11) thereby allowing displacement of the female terminal (1) along said coupling axis (X-X).

2. A female terminal (1) as claimed in claim 1, wherein said first lock means (30) comprise at least two stop members (31, 32) movable transversely to the coupling axis (X-X) and said second lock means (60) comprise at least two lugs (61, 62),
in said locking position, each lug (61, 62) pressing against a corresponding stop member (31, 32) to prevent disengagement of the stop member (31, 32) from the abutment surface (11) of the male terminal (10) and
in said unlocking position, each lug (61, 62) disengaging from its respective stop member (31, 32) to allow disengagement of the stop member (31, 32) from the abutment surface (11) of the male terminal (10).

3. A female electrical terminal (1) as claimed in claim 2, wherein each stop member (31, 32) is supported by two opposite tabs (33, 34) which are connected to the ends of the stop member (31, 32) and act on the stop member (31, 32) to hold the stop member (31, 32) in the locking position.

4. A female electrical terminal (1) as claimed in claim 3, wherein said tabs (33, 34) have an elastic action on said stop members (31, 32) to hold said stop members (31, 32) in the locking position.

5. A female electrical terminal (1) as claimed in any one of claims 2 to 4, wherein said second lock means (60) comprise a tubular element (63) which is closed at the top by a top wall (64) and open at the bottom, said lugs (61, 62) being connected to the inner surface (64a) of the top wall (64) of the tubular element (63).

6. A female electrical terminal (1) as claimed in any one of claims 1 to 5, wherein said clamping means (20) comprise a holding member (21) associated outside to said conductive part (4) to encircle said conductive part (4) so that said conductive part (4) is held in contact with said male terminal (10).

7. An electrical connection (50) comprising:
- a male electrical terminal (10) having an abutment surface (11),
- a female electrical terminal 1 as claimed in any one of claims 1 to 5, said female electrical terminal (1) being plugged on said male terminal (10),
the second lock means (60) acting, in said locking position, on said first lock means (30) to prevent disengagement of said first lock means (30) from said abutment surface (11), thereby preventing displacement of the female terminal (1) along said coupling axis (X-X) in the direction opposite to the plug-on direction.

8. An electrical connection (50) as claimed in claim 7, wherein said male electrical terminal (10) mainly extends along said coupling axis (X-X), said abutment surface (11) extending radially with respect to the coupling axis (X-X).

## Patentansprüche

1. Elektrische Kontaktbuchse (1), umfassend:
- einen leitenden Korpus (2) mit einem leitenden Teil (4), das mit einem elektrischen Verbindungsstecker (10) entlang einer Kopplungsachse (X-X) und in einer Aufsteckrichtung gekoppelt werden kann,
- Klemmittel (20), die auf der Außenseite dem leitfähigen Teil (4) zum Festklemmen des leitfähigen Teils (4) auf dem Verbindungsstecker (10) zugeordnet sind,
- erste Verriegelungsmittel (30), die in der Lage sind, eine Anschlagfläche (11) des Verbindungssteckers (10) in Eingriff zu nehmen, wenn die Kontaktbuchse (1) auf den Verbindungsstecker (10) gesteckt wird,
- ein Stützelement (40), das den leitfähigen Teil (4) stützt und mit den ersten Verriegelungsmitteln (30) verbunden ist,
**dadurch gekennzeichnet, daß** sie umfaßt
- zweite Verriegelungsmittel (60), die den ersten Verriegelungsmitteln (30) lösbar zugeordnet werden können und die aus einer Verriegelungsposition in eine Entriegelungsposition bewegt werden können,
wobei die zweiten Verriegelungsmittel (60) in der Verriegelungsposition auf die ersten Verriegelungsmittel (30) wirken, um ein Lösen der ersten Verriegelungsmittel (30) von der Anschlagfläche (11) zu verhindern, wodurch ein Verschieben der Kontaktbuchse (1) entlang der Kopplungsachse (X-X) in der Richtung entgegen der Aufsteckrichtung verhindert wird, wobei sich die zweiten Verriegelungsmittel (60) in der Entriegelungsposition von den ersten Verriegelungsmitteln (30) trennen, um ein Lösen der ersten Verriegelungsmittel (30) von der Anschlagfläche (11) zu ermöglichen, wodurch eine Verschiebung der Kontaktbuchse (1) entlang der Kopplungsachse (X-X) ermöglicht wird.

2. Kontaktbuchse (1) nach Anspruch 1, wobei die ersten Verriegelungsmittel (30) mindestens zwei Stoppelemente (31, 32) umfassen, die quer zu der Kopplungsachse (X-X) bewegt werden können, und wobei die zweiten Verriegelungsmittel (60) mindestens zwei Ansätze (61, 62) umfassen,
wobei in der Verriegelungsposition jeder Ansatz (61, 62) gegen ein entsprechendes Stoppelement (31, 32) drückt, um ein Lösen des Stoppelements (31, 32) von der Anschlagfläche (11) des Verbindungssteckers (10) zu verhindern, und
wobei sich in der Entriegelungsposition jeder Ansatz (61, 62) von seinem jeweiligen Stoppelement (31, 32) trennt, um ein Lösen des Stoppelements (31, 32) von der Anschlagfläche (11) des Verbindungssteckers (10) zu ermöglichen.

3. Elektrische Kontaktbuchse (1) nach Anspruch 2, wobei jedes Stoppelement (31, 32) durch zwei gegenüberliegende Laschen (33, 34) gestützt wird, die mit den Enden des Stoppelements (31, 32) verbunden sind und auf das Stoppelement (31, 32) wirken, um das Stoppelement (31, 32) in der Verriegelungsposition zu halten.

4. Elektrische Kontaktbuchse (1) nach Anspruch 3, wobei die Laschen (33, 34) eine elastische Wirkung auf die Stoppelemente (31, 32) ausüben, um die Stoppelemente (31, 32) in der Verriegelungsposition zu halten.

5. Elektrische Kontaktbuchse (1) nach einem der Ansprüche 2 bis 4, wobei die zweiten Verriegelungsmittel (60) ein röhrenförmiges Element (63) umfassen, das am oberen Ende durch eine obere Wand (64) verschlossen ist und am unteren Ende offen ist, wobei die Ansätze (61, 62) mit der Innenfläche (64a) der oberen Wand (64) des röhrenförmigen Elements (63) verbunden sind.

6. Elektrische Kontaktbuchse (1) nach einem der Ansprüche 1 bis 5, wobei die Klemmittel (20) ein Halteelement (21) umfassen, das auf der Außenseite dem leitfähigen Teil (4) zugeordnet ist, um den leitfähigen Teil (4) so zu umfassen, daß der leitfähige Teil (4) in Kontakt mit dem Verbindungsstecker (10) gehalten wird.

7. Elektrische Verbindung (50), umfassend:
- einen elektrischen Verbindungsstecker (10) mit einer Anschlagfläche (11),
- eine elektrische Kontaktbuchse (1) nach einem der Ansprüche 1 bis 5, wobei die elektrische Kontaktbuchse (1) auf den Verbindungsstecker (10) gesteckt wird,
wobei die zweiten Verriegelungsmittel (60) in der Verriegelungsposition auf die ersten Verriegelungsmittel (30) wirken, um ein Lösen der ersten Verriegelungsmittel (30) von der Anschlagfläche (11) zu verhindern, wodurch eine Verschiebung der Kontaktbuchse (1) entlang der Kopplungsachse (X-X) in der Richtung entgegen der Aufsteckrichtung verhindert wird.

8. Elektrische Verbindung (50) nach Anspruch 7, wobei sich der elektrische Verbindungsstecker (10) überwiegend entlang der Kopplungsachse (X-X) erstreckt, wobei sich die Anschlagfläche (11) radial bezüglich der Kopplungsachse (X-X) erstreckt.

## Revendications

1. Elément femelle de raccordement électrique (1) comprenant:
- un corps conducteur (2) ayant une partie conductrice (4) apte à être couplée à un élément mâle de raccordement électrique (10) suivant un axe de couplage (X-X) et dans une direction d'emboîtement,
- des moyens de serrage (20) qui sont associés, sur la face extérieure, à ladite partie conductrice (4) pour serrer ladite partie conductrice (4) sur ledit élément mâle de raccordement (10)
- des premiers moyens de verrouillage (30) aptes à venir en prise avec une surface de butée (11) de l'élément mâle de raccordement (10) lorsque ledit élément femelle de raccordement (1) est emboîté sur ledit élément mâle de raccordement (10),
- un élément de support (40) qui supporte ladite partie conductrice (4) et est relié auxdits premiers moyens de verrouillage (30),
**caractérisé par le fait qu'**il comprend
- des seconds moyens de verrouillage (60) qui peuvent être associés de manière amovible auxdits premiers moyens de verrouillage (30) et qui sont déplaçables depuis une position de verrouillage vers une position de déverrouillage,
dans ladite position de verrouillage, lesdits seconds moyens de verrouillage (60) agissant sur lesdits premiers moyens de verrouillage (30) de manière à éviter que les premiers moyens de verrouillage (30) ne se détachent de ladite surface de butée (11), évitant ainsi un déplacement de l'élément femelle de raccordement (1) suivant ledit axe de couplage (X-X) dans la direction opposée à la direction d'emboîtement, lesdits seconds moyens de verrouillage (60) se détachant, dans ladite position de déverrouillage, desdits premiers moyens de verrouillage (30) afin de permettre aux premiers moyens de verrouillage (30) de se détacher de ladite surface de butée (11), permettant ainsi un déplacement de l'élément femelle de raccordement (1) suivant ledit axe de couplage (X-X).

2. Elément femelle de raccordement (1) selon la revendication 1, dans lequel lesdits premiers moyens de verrouillage (30) comprennent au moins deux éléments d'arrêt (31, 32) qui sont déplaçables transversalement à l'axe de couplage (X-X), et lesdits seconds moyens de verrouillage (60) comprennent au moins deux saillies (61, 62),
dans la position de verrouillage, chacune des saillies (61, 62) se plaquant contre un élément d'arrêt (31, 32) correspondant de manière à éviter que ledit élément d'arrêt (31, 32) ne se détache de ladite surface de butée (11) de l'élément mâle de raccordement (10), et
dans la position de déverrouillage, chacune des saillies (61, 62) se détachant de son élément d'arrêt (31, 32) respectif de manière à permettre que ledit élément d'arrêt (31, 32) se détache ladite surface de butée (11) de l'élément mâle de raccordement (10).

3. Elément femelle de raccordement électrique (1) selon la revendication 2, dans lequel chacun des éléments d'arrêt (31, 32) est supporté par deux languettes (33, 34) opposées qui sont reliées aux extrémités de l'élément d'arrêt (31, 32) et agissent sur ledit élément d'arrêt (31, 32) de manière à maintenir ledit élément d'arrêt (31, 32) dans la position de verrouillage.

4. Elément femelle de raccordement électrique (1) selon la revendication 3, dans lequel lesdites languettes (33, 34) exercent une action élastique sur lesdits éléments d'arrêt (31, 32) de manière à maintenir les éléments d'arrêt (31, 32) dans la position de verrouillage.

5. Elément femelle de raccordement électrique (1) selon l'une quelconque des revendications 2 à 4, dans lequel lesdits seconds moyens de verrouillage (60) comprennent un élément tubulaire (63) qui est fermé en haut par une paroi supérieure (64) et qui est ouvert au fond, lesdites saillies (61, 62) étant reliées à la surface intérieure (64a) de ladite paroi supérieure (64) de l'élément tubulaire (63).

6. Elément femelle de raccordement électrique (1) selon l'une quelconque des revendications 1 à 5, dans lequel lesdits moyens de serrage (20) comprennent un élément de maintien (21) qui est associé, sur la face extérieure, à ladite partie conductrice (4) afin d'embrasser ladite partie conductrice (4) de manière à ce que ladite partie conductrice (4) soit maintenue en contact avec ledit élément mâle de raccordement (10).

7. Connexion électrique (50) comprenant:
- un élément mâle de raccordement électrique (10) ayant une surface de butée (11),
- un élément femelle de raccordement électrique (1) selon l'une quelconque des revendications 1 à 5, ledit élément femelle de raccordement électrique (1) étant emboîté sur ledit élément mâle de raccordement (10),
dans la position de verrouillage, lesdits seconds moyens de verrouillage (60) agissant sur lesdits premiers moyens de verrouillage (30) de manière à éviter que les premiers moyens de verrouillage (30) ne se détachent de ladite surface de butée (11), évitant ainsi un déplacement de l'élément femelle de raccordement (1) suivant ledit axe de couplage (X-X) dans la direction opposée à la direction d'emboîtement.

8. Connexion électrique (50) selon la revendication 7, dans laquelle ledit élément mâle de raccordement électrique (10) s'étend principalement suivant ledit axe de couplage (X-X), ladite surface de butée (11) s'étendant radialement par rapport à l'axe de couplage (X-X).
